# EUROPÄISCHE PATENTSCHRIFT

(11) **EP 3 642 497 B1**
(45) Veröffentlichungstag und Bekanntmachung des Hinweises auf die Patenterteilung: **09.06.2021**
(21) Anmeldenummer: 18723681.5
(22) Anmeldetag: 16.04.2018
(51) Int. Cl.: F16C 19/26, F16C 33/62

(54) **GERÄUSCH- UND VERSCHLEISSOPTIMIERTES WÄLZLAGER ZUR LAGERUNG EINER WELLE**
NOISE AND WEAR OPTIMISED ROLLING BEARING FOR THE SUPPORT OF A SHAFT
OPTIMISATION SONORE ET D'USURE D'UN ROULEMENT POUR SOUTENIR UN ARBRE

(30) Priorität: 21.06.2017 DE 102017113701
(43) Veröffentlichungstag der Anmeldung: 29.04.2020
(73) Patentinhaber: Schaeffler Technologies AG & Co. KG, 91074 Herzogenaurach (DE)
(72) Erfinder: PAUSCH, Michael, 97456 Dittelbrunn (DE); CLAUS, Sven, 90431 Nürnberg (DE); HOCK, Tobias, 97421 Schweinfurt (DE); HILBINGER, Jürgen, 91413 Neustadt/A. (DE); DINKEL, Markus, 97074 Würzburg (DE); VOLL, Martin, 97437 Haßfurt (DE)
(86) Internationale Anmeldenummer: PCT/DE2018/100357
(87) Internationale Veröffentlichungsnummer: WO 2018/233747

(56) Entgegenhaltungen:
- EP-A1- 2 954 219
- EP-B1- 2 825 783
- DE-A1-102011 082 905
- DE-A1-102013 221 685
- DE-A1-102016 205 571
- US-A- 5 586 826
- US-A1- 2016 153 495

## Beschreibung

### Gebiet der Erfindung

Die Erfindung betrifft ein Wälzlager zur Lagerung einer Welle. Ferner betrifft die Erfindung auch eine Lageranordnung, umfassend eine Welle, die mittels Wälzlager drehbar gelagert ist.

### Hintergrund der Erfindung

Die EP 2 825 783 B1 offenbart eine Ritzellageranordnung eines Getriebes für ein Fahrzeug oder Luftfahrzeug, die mindestens ein Rollenlager umfasst. Mindestens eines der Rollenlager ist ein Kugellager, wobei das Kugellager einen Innenring und einen Außenring aufweist. Beide Ringe weisen Laufbahnen für Kugeln, die sich innerhalb der Ringe befinden, auf. Mindestens eine Laufbahn weist einen Radius auf und die Kugeln haben einen Durchmesser. Das Verhältnis vom Radius der Laufbahn zum Durchmesser der Kugel beträgt 0,53. Ferner ist mindestens einer der Ringe aus einem Kugellagerstahl ausgebildet, das durch ein pulvermetallurgisches Verfahren hergestellt wird. Dazu wird eine pulvermetallurgische Komponente verwendet wird, die 0, 5 bis 2,0 Gew.-% C, maximal 0,035 Gew.-% S, 3,0 bis 5,0 Gew.-% Cr, 1,0 bis 4,0 Gew.-% V, 1,0 bis 12,0 Gew.-% W und 2,0 bis 12,0 Gew.-% Mo enthält. Die Oberfläche der Laufbahnen weist eine Härte zwischen 65 HRC und 70 HRC auf und die Kugeln des mindestens einen Kugellagers sind aus keramischem Material hergestellt, wobei eine Härte einer Oberfläche der jeweiligen Laufbahn mindestens 62 HRC und eine Schmiegung zwischen der Laufbahn (4) am Innenring (2) und den Kugeln (6) und/oder eine Schmiegung zwischen der Laufbahn (5) am Außenring (3) und den Kugeln (6) mindestens 1,05 beträgt.

### Aufgabe der Erfindung

Die Aufgabe der vorliegenden Erfindung besteht darin, ein geräusch- und verschleißoptimiertes Wälzlager zu schaffen.

### Beschreibung der Erfindung

Diese Aufgabe wird durch ein Wälzlager mit den Merkmalen des Anspruchs 1 gelöst. Bevorzugte oder vorteilhafte Ausführungsformen der Erfindung ergeben sich aus den Unteransprüchen der nachfolgenden Beschreibung sowie den beigefügten Figuren.

Das erfindungsgemäße Wälzlager zur Lagerung einer Welle umfasst einen Innenring und einen Außenring, die aus einem Ringwerkstoff ausgebildet sind, wobei der Innenring an einer Außenumfangsfläche und der Außenring an einer Innenumfangsfläche jeweils eine Laufbahn zur Führung von Kugeln aufweisen, wobei die Kugeln auf der jeweiligen Laufbahn abwälzen, wobei der Ringwerkstoff 0,5 bis 2 Gew.-% Kohlenstoff, höchstens 0,035 Gew.-% Schwefel, 3 bis 5 Gew.-% Chrom, 1 bis 4 Gew.-% Vanadium, 1 bis 12 Gew.-% Wolfram und 2 bis 12 Gew.-% Molybdän umfasst, wobei eine Härte einer Oberfläche der jeweiligen Laufbahn mindestens 62 HRC beträgt, wobei der Innenring und der Außenring ein E-Modul von 220 bis 250 MPa aufweisen, wobei ferner eine Schmiegung zwischen der Laufbahn am Innenring beziehungsweise einem Laufrillendurchmesser am Innenring und den Kugeln und/oder eine Schmiegung zwischen der Laufbahn am Außenring beziehungsweise einem Laufrillendurchmesser am Außenring und den Kugeln mindestens 1,05 beträgt, und wobei zumindest die Laufbahn am Innenring und/oder die Laufbahn am Außenring eine Oberflächenrauheit mit einem Mittenrauhwert Rₐ von 0,005 bis 0,03, mit einer Schiefe Rₛₖ von 0,3 bis -5 und mit einer Steilheit Rₖᵤ von 3 bis 15 aufweist.

Gemäß einem bevorzugten Ausführungsbeispiel ist der Ringwerkstoff die Stahllegierung M62.

Unter einem Mittenrauhwert Rₐ ist der arithmetische Mittelwert der Beträge aller Profilwerte des Rauheitsprofils einer Oberfläche zu verstehen. Ferner ist unter einer Schiefe Rₛₖ ein Maß für die Unsymmetrie einer Amplitudendichtekurve der Oberflächenrauheit zu verstehen. Eine negative Schiefe kennzeichnet eine Oberfläche mit gutem Tragverhalten. Die Steilheit Rₖᵤ gilt als Maß für die Steilheit der Amplitudendichtekurve der Oberflächenrauheit. Bei normalverteilten Profilwerten beträgt die Steilheit Rₖᵤ 3. Die Kenngrößen Schiefe Rₛₖ und Steilheit Rₖᵤ werden stark von einzelnen Spitzen und Tälern des Profils für die Oberflächenrauheit beeinflusst.

Die Kugeln wälzen in bevorzugt rillenförmig ausgebildeten Laufbahnen am Innenring und Außenring ab, sodass der Außenring und der Innenring relativ zueinander um eine Drehachse verdrehbar sind. Die Schmiegung gibt das Verhältnis zwischen Laufbahnradius und Kugeldurchmesser an. Mithin lässt sich die Schmiegung durch Bildung des Quotienten zwischen dem jeweiligen Laufbahnradius und dem Kugeldurchmesser berechnen. Erfindungsgemäß beträgt entweder die Schmiegung zwischen der Laufbahn am Innenring und den Kugeln mindestens 1,05 oder die Schmiegung zwischen der Laufbahn am Außenring und den Kugeln mindestens 1,05 oder sowohl die Schmiegung zwischen der Laufbahn am Innenring und den Kugeln als auch die Schmiegung zwischen der Laufbahn am Außenring und den Kugeln mindestens 1,05.

Ist der Radius der jeweiligen Laufbahn gleich dem Durchmesser der darauf abwälzenden Kugel, beträgt die Schmiegung 1. Dementsprechend steigt die Schmiegung mit zunehmendem Laufbahnradius an. Mit steigender Schmiegung nimmt die Kontaktfläche zwischen Kugel und Kontaktbereich an der Laufbahn ab, was sich vorteilhaft bei Reibverlusten auswirkt. Mit sinkender Schmiegung vergrößert sich entsprechend die Kontaktfläche zwischen Kugel und Kontaktbereich der Laufbahn, wobei gleichzeitig die Reibverluste ansteigen.

Vorzugsweise beträgt die Schmiegung zwischen der Laufbahn am Innenring und den Kugeln und/oder die Schmiegung zwischen der Laufbahn am Außenring und den Kugeln 1,05 bis 1,13. Überaschenderweise hat sich herausgestellt, dass die Geräusch- und Verschleißoptimierung des Wälzlagers am stärksten ist, wenn das Verhältnis zwischen Laufbahnradius und Kugeldurchmesser mindestens 1,05 und höchstens 1,13 beträgt. Mithin ist der Kompromiss zwischen Geräusch- und Verschleißoptimierung bei einer Schmiegung von 1,05 bis 1,13 zwischen der jeweiligen Laufbahn und der jeweiligen Kugel.

Die beschriebenen Schmiegungsbereiche erzeugen eine definiert kleine Druckfläche zwischen dem Wälzkörper beziehungsweise der Kugel und dem jeweiligen Lagerring. Aus einer kleinen Druckfläche resultiert wenig Reibung und wenig Verschleißfläche. Zusätzlich wird durch die Rauheitsdefinition ein optimaler Schmierungszustand zwischen Lagerring und Kugel erreicht. Verantwortlich ist dafür ein Öl-Rückhalteeffekt aufgrund der plateauartigen Oberfläche (Rₛₖ negativ). Die Rauheits-Schmiegungs-Werkstoffkombination ist ausschlaggebend für die Verschleiß- und Geräuscheigenschaften des Wälzlagers.

Bevorzugt sind die Kugeln aus einem keramischen Werkstoff oder dem Ringwerkstoff ausgebildet. Mithin sind die Kugeln aus einer Keramik ausgebildet oder aus dem Ringwerkstoff, der 0,5 bis 2 Gew.-% Kohlenstoff, höchstens 0,035 Gew.-% Schwefel, 3 bis 5 Gew.-% Chrom, 1 bis 4 Gew.-% Vanadium, 1 bis 12 Gew.-% Wolfram und 2 bis 12 Gew.-% Molybdän umfasst. Durch die Anwendung von keramischen Wälzkörpern oder hoch verschleißfesten Spezialstahlwälzkörpern aus dem Ringwerkstoff wird eine nochmalige Herabsetzung der Druckflächengröße sowie eine verbesserte tribologische Paarung zwischen Ringwerkstoff und Kugel realisiert.

Ferner bevorzugt sind der Innenring und der Außenring zumindest teilweise pulvermetallurgisch hergestellt. Mit anderen Worten betrifft zumindest ein Verfahrensschritt in der Herstellung des Innenrings und des Außenrings das Mischen und Weiterverarbeiten der zumindest teilweise pulverförmigen Bestandeile von Kohlenstoff zu 0,5 bis 2 Gew.-%, Schwefel zu höchstens 0,035 Gew.-%, Chrom zu 3 bis 5 Gew.-%, Vanadium zu 1 bis 4 Gew.-%, Wolfram zu 1 bis 12 Gew.-% und Molybdän zu 2 bis 12 Gew.-%.

Gemäß einem bevorzugten Ausführungsbeispiel betrifft die Erfindung eine Lageranordnung, umfassend eine Welle und mindestens ein Wälzlager gemäß Anspruch 1, wobei die Welle als Spindelwelle einer Werkzeugmaschine ausgebildet ist. Insbesondere ist die Welle als Hauptspindelwelle, Vorschubspindelwelle und/oder Abrichtspindelwelle ausgebildet. Ferner ist es auch denkbar, das angetriebene Werkzeug durch mindestens ein erfindungsgemäßes Wälzlager zu lagern.

Gemäß einem weiteren bevorzugten Ausführungsbeispiel betrifft die Erfindung eine Lageranordnung, umfassend eine Welle und mindestens ein erfindungsgemäßes Wälzlager, wobei die Welle als Verdichterwelle eines Turboverdichters oder Kompressors ausgebildet ist.

Gemäß einem weiteren bevorzugten Ausführungsbeispiel betrifft die Erfindung eine Lageranordnung, umfassend eine Welle und mindestens ein erfindungsgemäßes Wälzlager, wobei die Welle als Rotorwelle einer elektrischen Maschine, insbesondere eines Elektromotors und/oder Generators ausgebildet ist. An der Rotorwelle ist drehfest der Rotor der elektrischen Maschine angeordnet, wobei der Rotor um einen gehäusefesten Stator, bevorzugt innerhalb des gehäusefesten Stators rotiert.

Die Verwendung eines erfindungsgemäßen Wälzlagers wird zur Lagerung einer Spindelwelle oder zur Lagerung einer Verdichterwelle oder zur Lagerung einer Rotorwelle vorgeschlagen. Somit eignet sich das Wälzlager besonders gut zur Lagerung schnelldrehender Wellen. Das erfindungsgemäße Wälzlager ermöglicht eine geräusch- und verschleißoptimierte Lagerung der Welle. Schnelldrehend sind Drehzahlen über eine Million Umdrehungen pro Minute, wobei n*dm gilt, wobei n die Drehzahl und dm der mittlere Lagerdurchmesser ist. Beispielsweise ist unter schnelldrehend 10.000 Umdrehungen pro Minute bei einem mittlerem Lagerdurchmesser von 100 mm zu verstehen.

### Kurze Beschreibung der Zeichnungen

Weitere die Erfindung verbessernde Maßnahmen werden nachstehend gemeinsam mit der Beschreibung eines bevorzugten Ausführungsbeispiels der Erfindung anhand der Figuren, näher dargestellt. Dabei zeigt:
- Figur 1: eine schematische Perspektivdarstellung eines erfindungsgemäßen Wälzlagers, und
- Figur 2: eine schematische Teilschnittdarstellung einer Lageranordnung mit dem erfindungsgemäßen Wälzlager gemäß Figur 1 und mit einer Welle.

### Ausführliche Beschreibung der Zeichnungen

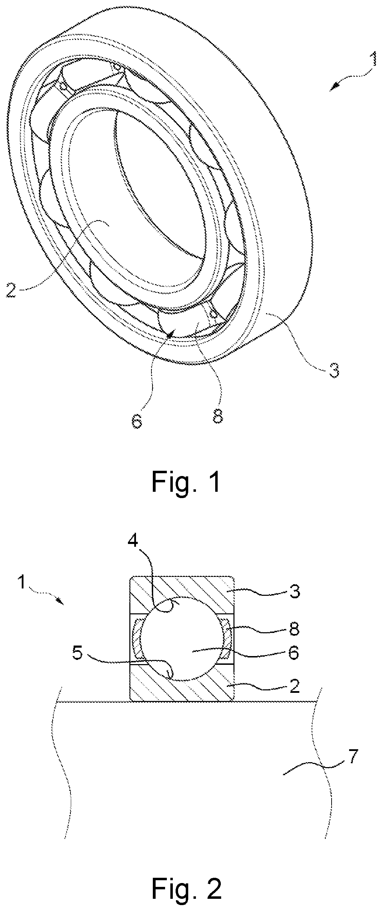

Gemäß Figur 1 umfasst ein erfindungsgemäßes Wälzlager 1 für eine - hier nicht dargestellte - Werkzeugmaschine einen Innenring 2 und einen Außenring 3 sowie radial zwischen dem Innenring 2 und dem Außenring 3 angeordnete Kugeln 6 als Wälzkörper. Die Kugeln 6 werden durch einen Käfig 8 geführt. Das Wälzlager 1 ist als Rillenkugellager ausgebildet.

In Figur 2 lagert das Wälzlager 1 aus Figur 1 eine Welle 7. Die Welle 7 ist vorliegend als Spindelwelle der Werkzeugmaschine ausgebildet und nur teilweise dargestellt. Der Innenring 2 weist an einer Außenumfangsfläche eine Laufbahn 4 zur Führung von Kugeln 6 auf. Ferner weist auch der Außenring 3 an einer Innenumfangsfläche eine Laufbahn 5 zur Führung von Kugeln 6 auf. Die Kugeln 6 wälzen auf der jeweiligen Laufbahn 4, 5 zwischen dem Innenring 2 und dem Außenring 3 ab, wobei die Kugeln 6 aus einem keramischen Werkstoff ausgebildet sind.

Der Innenring 2 und der Außenring 3 sind aus einem Ringwerkstoff ausgebildet, wobei der Ringwerkstoff pulvermetallurgisch aus 0,5 bis 2 Gew.-% Kohlenstoff, höchstens 0,035 Gew.-% Schwefel, 3 bis 5 Gew.-% Chrom, 1 bis 4 Gew.-% Vanadium, 1 bis 12 Gew.-% Wolfram, 2 bis 12 Gew.-% Molybdän und Eisen ausgebildet ist. Die Härte einer Oberfläche der jeweiligen Laufbahn 4, 5 beträgt 62 HRC. Der Innenring 2 und der Außenring 3 weisen ein E-Modul von 230 MPa auf. Eine Schmiegung zwischen der Laufbahn 4 am Innenring 2 und den Kugeln 6 beträgt ebenso wie eine Schmiegung zwischen der Laufbahn 5 am Außenring 3 und den Kugeln 6 1,05. Ferner weisen die Laufbahn 5 am Innenring 2 und die Laufbahn 5 am Außenring 3 eine Oberflächenrauheit mit einem Mittenrauhwert Rₐ von 0,005 bis 0,03, mit einer Schiefe Rₛₖ von 0,3 bis -5 und mit einer Steilheit Rₖᵤ von 3 bis 15 auf.

### Bezugszeichenliste

- 1: Wälzlager
- 2: Innenring
- 3: Außenring
- 4: Laufbahn
- 5: Laufbahn
- 6: Kugel
- 7: Welle
- 8: Käfig

## Patentansprüche

1. Wälzlager (1) zur Lagerung einer Welle (7), umfassend einen Innenring (2) und einen Außenring (3) die aus einem Ringwerkstoff ausgebildet sind, wobei der Innenring (2) an einer Außenumfangsfläche und der Außenring (3) an einer Innenumfangsfläche jeweils eine Laufbahn (4, 5) zur Führung von Kugeln (6) aufweisen, wobei die Kugeln (6) auf der jeweiligen Laufbahn (4, 5) abwälzen, wobei der Ringwerkstoff 0,5 bis 2 Gew.-% Kohlenstoff, höchstens 0,035 Gew.-% Schwefel, 3 bis 5 Gew.-% Chrom, 1 bis 4 Gew.-% Vanadium, 1 bis 12 Gew.-% Wolfram und 2 bis 12 Gew.-% Molybdän umfasst, wobei eine Härte einer Oberfläche der jeweiligen Laufbahn (4, 5) mindestens 62 HRC und eine Schmiegung zwischen der Laufbahn (4) am Innenring (2) und den Kugeln (6) und/oder eine Schmiegung zwischen der Laufbahn (4) am Außenring (3) und den Kugeln (6) mindestens 1,05 beträgt, **dadurch gekennzeichnet, dass** das Wälzlager (1) durch Ausbildung des Innenrings (2) und des Außenrings (3) mit einem E-Modul von 220 bis 250 MPa sowie durch Ausbildung zumindest der Laufbahn (5) am Innenring (2) und/oder zumindest der Laufbahn (5) am Außenring (3) mit einer Oberflächenrauheit mit einem Mittenrauhwert Rₐ von 0,005 bis 0,03, mit einer Schiefe Rₛₖ von 0,3 bis -5 und mit einer Steilheit Rₖᵤ von 3 bis 15 reduzierte Laufgeräusche aufweist.

2. Wälzlager (1) nach Anspruch 1, **dadurch gekennzeichnet, dass** die Schmiegung zwischen der Laufbahn (4) am Innenring (2) und den Kugeln (6) und/oder die Schmiegung zwischen der Laufbahn (5) am Außenring (3) und den Kugeln (6) 1,05 bis 1,13 beträgt.

3. Wälzlager (1) nach einem der vorhergehenden Ansprüche, **dadurch gekennzeichnet, dass** die Kugeln (6) aus einem keramischen Werkstoff oder dem Ringwerkstoff ausgebildet sind.

4. Wälzlager (1) nach einem der vorhergehenden Ansprüche, **dadurch gekennzeichnet, dass** der Innenring (2) und der Außenring (3) zumindest teilweise pulvermetallurgisch hergestellt sind.

5. Lageranordnung, umfassend eine Welle (7) und mindestens ein Wälzlager (1) nach einem der Ansprüche 1 bis 4, wobei die Welle (7) als Spindelwelle einer Werkzeugmaschine ausgebildet ist.

6. Lageranordnung, umfassend eine Welle (7) und mindestens ein Wälzlager (1) nach einem der Ansprüche 1 bis 4, wobei die Welle (7) als Verdichterwelle eines Turboverdichters oder Kompressors ausgebildet ist.

7. Lageranordnung, umfassend eine Welle (7) und mindestens ein Wälzlager (1) nach einem der Ansprüche 1 bis 4, wobei die Welle (7) als Rotorwelle einer elektrischen Maschine ausgebildet ist.

8. Verwendung eines Wälzlagers (1) nach einem der Ansprüche 1 bis 4 zur Lagerung einer Spindelwelle oder zur Lagerung einer Verdichterwelle oder zur Lagerung einer Rotorwelle.

## Claims

1. A rolling bearing (1) for the mounting of a shaft (7), comprising an inner ring (2) and an outer ring (3) which are formed from a ring material, wherein the inner ring (2) has on an outer circumferential surface and the outer ring (3) has on an inner circumferential surface a raceway (4, 5) for guiding balls (6), the balls (6) rolling on the respective raceway (4, 5), the ring material comprising 0.5 to 2 wt% carbon, at most 0.035 wt% sulphur, 3 to 5 wt% chromium, 1 to 4 wt% vanadium, 1 to 12 wt% tungsten and 2 to 12 wt% molybdenum, a hardness of a surface of the respective raceway (4, 5) being at least 62 HRC and an osculation between the raceway (4) on the inner ring (2) and the balls (6) and/or an osculation between the raceway (4) on the outer ring (3) and the balls (6) being at least 1.05, **characterised in that** the rolling bearing (1), by forming the inner ring (2) and the outer ring (3) with an E-modulus of 220 to 250 MPa and by forming at least the raceway (5) on the inner ring (2) and/or at least the raceway (5) on the outer ring (3) with a surface roughness with an average roughness value Rₐ of 0.005 to 0.03, with an skewness Rₛₖ of 0.3 to -5 and with a gradient Rₖᵤ of 3 to 15 has reduced operating noise.

2. The rolling bearing (1) according to claim 1, **characterised in that** the osculation between the raceway (4) on the inner ring (2) and the balls (6) and/or the osculation between the raceway (5) on the outer ring (3) and the balls (6) is 1.05 to 1.13.

3. The rolling bearing (1) according to any one of the preceding claims, **characterised in that** the balls (6) are formed from a ceramic material or the ring material.

4. The rolling bearing (1) according to any one of the preceding claims, **characterised in that** the inner ring (2) and the outer ring (3) are at least partially produced by powder metallurgy.

5. A bearing arrangement, comprising a shaft (7) and at least one rolling bearing (1) according to one of claims 1 to 4, wherein the shaft (7) is formed as a spindle shaft of a machine tool.

6. A bearing arrangement, comprising a shaft (7) and at least one rolling bearing (1) according to one of claims 1 to 4, wherein the shaft (7) is formed as a compressor shaft of a turbocompressor or compressor.

7. A bearing arrangement, comprising a shaft (7) and at least one rolling bearing (1) according to one of claims 1 to 4, wherein the shaft (7) is formed as a rotor shaft of an electric machine.

8. A use of a rolling bearing (1) according to one of claims 1 to 4 for the support of a spindle shaft or for the support of a compressor shaft or for the support of a rotor shaft.

## Revendications

1. Roulement (1) destiné au logement d'un arbre (7), comprenant une bague intérieure (2) et une bague extérieure (3), lesquelles sont constituées d'une matière des bagues, la bague intérieure (2) sur une surface périphérique extérieure et la bague extérieure (3) sur une surface périphérique intérieure comportant respectivement un chemin de roulement (4, 5) destiné au guidage des billes (6), les billes (6) roulant sur le chemin de roulement (4, 5) respectif, la matière des bagues comportant 0,5 à 2 % en poids de carbone, au plus 0,035 % en poids de soufre, 3 à 5 % en poids de chrome, 1 à 4 % en poids de vanadium, 1 à 12 % en poids de tungstène et 2 à 12 % en poids de molybdène, une dureté d'une surface du chemin de roulement (4, 5) respectif étant d'au moins 62 HRC et une osculation entre le chemin de roulement (4) sur la bague intérieure (2) et les billes (6) et/ou une osculation entre le chemin de roulement (4) sur la bague extérieure (3) et les billes (6) étant d'au moins 1,05, **caractérisé en ce que** le roulement (1) présente les bruits de roulement réduits en raison de la configuration de la bague intérieure (2) et de la bague extérieure (3) à l'aide d'un module d'élasticité de 220 jusqu'à 250 Mpa, ainsi qu'en raison de la configuration d'au moins le chemin de roulement (5) sur la bague intérieure (2) et/ou d'au moins le chemin de roulement (5) sur la bague extérieure (3) présentant une rugosité de surface d'une valeur de rugosité moyenne Rₐ comprise entre 0,005 et 0,03, présentant une inclinaison Rₛₖ comprise entre 0,3 et -5 et présentant une pente Rₖᵤ comprise entre 3 et 15.

2. Roulement (1) selon la revendication 1, **caractérisé en ce que** l'osculation entre le chemin de roulement (4) sur la bague intérieure (2) et les billes (6) et/ou l'osculation entre le chemin de roulement (5) sur la bague extérieure (3) et les billes (6) sont comprises entre 1,05 et 1,13.

3. Roulement (1) selon l'une quelconque des revendications précédentes, **caractérisé en ce que** les billes (6) sont constituées d'une matière céramique ou d'une matière des bagues.

4. Roulement (1) selon l'une quelconque des revendications précédentes, **caractérisé en ce que** la bague intérieure (2) et la bague extérieure (3) sont au moins partiellement fabriquées selon la technique de la métallurgie des poudres.

5. Agencement de roulement, comprenant un arbre (7) et au moins un roulement (1) selon l'une quelconque des revendications 1 à 4, l'arbre (7) étant conçu sous la forme d'un arbre de broche d'une machine-outil.

6. Agencement de roulement, comprenant un arbre (7) et au moins un roulement (1) selon l'une quelconque des revendications 1 à 4, l'arbre (7) étant conçu sous la forme d'un arbre de compresseur d'un turbocompresseur ou d'un compresseur.

7. Agencement de roulement comprenant un arbre (7) et au moins un roulement (1) selon l'une quelconque des revendications 1 à 4, l'arbre (7) étant conçu sous la forme d'un arbre de rotor d'une machine électrique.

8. Utilisation d'un roulement (1) selon l'une quelconque des revendications 1 à 4 destiné au logement d'un arbre de broche ou logement d'un arbre de compresseur ou au logement d'un arbre de rotor.
